(19) Europäisches Patentamt
European Patent Office
Office européen des brevets

(11) **EP 4 141 055 A1**

(12) **EUROPEAN PATENT APPLICATION**

(43) Date of publication:
**01.03.2023 Bulletin 2023/09**

(21) Application number: **22201442.5**

(22) Date of filing: **12.07.2016**

(51) International Patent Classification (IPC):
*C08J 5/18* (2006.01)    *B32B 27/08* (2006.01)
*B32B 27/30* (2006.01)    *B32B 27/22* (2006.01)
*B32B 3/26* (2006.01)     *B32B 38/06* (2006.01)
*B32B 17/10* (2006.01)    *B32B 3/02* (2006.01)
*B32B 9/04* (2006.01)     *B32B 27/18* (2006.01)
*B32B 27/36* (2006.01)    *B32B 27/42* (2006.01)
*B32B 3/30* (2006.01)

(52) Cooperative Patent Classification (CPC):
**B32B 3/30; B32B 3/02; B32B 9/045;
B32B 17/10568; B32B 17/10587; B32B 17/10761;
B32B 27/08; B32B 27/18; B32B 27/22;
B32B 27/306; B32B 27/36; B32B 27/365;
B32B 27/42;** B32B 2250/24; B32B 2255/10; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2015   US 201562193393 P
20.08.2015   US 201514830902**

(62) Document number(s) of the earlier application(s) in
accordance with Art. 76 EPC:
**16825022.3 / 3 322 747**

(71) Applicant: **Solutia Incorporated
St. Louis, Missouri 63141 (US)**

(72) Inventors:
• **CREYTENS, Hans
99000 Eeklo (BE)**
• **MATIS, Gary
Wilbraham, 01095 (US)**
• **KARAGIANNIS, Aristotelis
Amherst, 01002 (US)**

(74) Representative: **Ricker, Mathias
Wallinger Ricker Schlotter Tostmann
Patent- und Rechtsanwälte Partnerschaft mbB
Zweibrückenstrasse 5-7
80331 München (DE)**

Remarks:
This application was filed on 13-10-2022 as a
divisional application to the application mentioned
under INID code 62.

(54) **POLYMERIC INTERLAYERS HAVING ENHANCED SURFACE ROUGHNESS**

(57)    Embossed polymer sheets and interlayers having at least one tapered zone are provided. The roughness of the embossed portion of the sheets and interlayers may be substantially uniform. Methods and systems for producing such interlayers are also described herein and may utilize at least one pair of rollers oriented substantially parallel to one another. When used in multiple layer panels, such as safety glass laminates, the embossed tapered interlayers described herein exhibit excellent optical performance, as indicated by the low haze and high clarity of the resulting panels.

FIG.1

**(Cont. next page)**

(52) Cooperative Patent Classification (CPC): (Cont.)
B32B 2255/26; B32B 2307/308; B32B 2307/412;
B32B 2307/518; B32B 2307/536; B32B 2307/538;
B32B 2307/732; B32B 2419/00; B32B 2457/12;
B32B 2571/00; B32B 2605/006; B32B 2607/00

**Description**

**CROSS REFERENCE TO RELATED APPLICATION(S)**

This Application claims the benefit of United States Provisional Patent Application Serial No: 62/193,393, filed July 16, 2015, the entire disclosure of which is incorporated by reference herein.

**BACKGROUND**

**1. Field of the Invention**

The present invention relates generally to polymer resins and methods of using the same. In particular, this invention relates to polymeric sheets and interlayers and methods for making and using the same.

**2. Description of Related Art**

Poly(vinyl butyral) (PVB) is often used in the manufacture of polymer sheets that can be used as interlayers in multiple layer panels, including, for example, light-transmitting laminated panels such as safety glass or polymeric laminates. PVB is also used in photovoltaic solar panels to encapsulate the panels which are used to generate and supply electricity for commercial and residential applications.

Safety glass generally refers to a transparent laminate that includes at least one polymer sheet, or interlayer, disposed between two sheets of glass. Safety glass is often used as a transparent barrier in architectural and automotive applications, and its primary functions are to absorb energy resulting from impact or a blow without allowing penetration of the object through the glass and to keep the glass bonded even when the applied force is sufficient to break the glass. This prevents dispersion of sharp glass shards, which minimizes injury and damage to people or objects within an enclosed area. Safety glass may also provide other benefits, such as a reduction in ultraviolet (UV) and/or infrared (IR) radiation, and it may also enhance the aesthetic appearance of window openings through addition of color, texture, and the like. Additionally, safety glass with desirable acoustic properties has also been produced, which results in quieter internal spaces.

During production of safety glass or other multiple layer panels, channels may be formed on one or more surfaces of the interlayer in order to provide pathways from which air may escape from the glass-polymer interface during the lamination process. Failure to sufficiently remove air from the panel during lamination may adversely impact the appearance and performance of the final laminate, due to, for example, nucleation and/or propagation of air bubbles during subsequent production and use. Sufficient removal of air requires a particular surface structure be imparted to the interlayer, especially when vacuum-type de-airing processes are utilized. Additionally, when the interlayer is a multiple layer interlayer, additional care must be taken to avoid transferring the outer surface structure to the inner layers or interfaces, in order to avoid excess mottle or optical distortion in the final laminate. Such requirements are further complicated when interlayers of non-uniform thickness are used and must be processed with conventional surface roughening techniques, such as embossing. Typically, embossing of such interlayers causes extensive non-uniformities and undesirable levels of roughness.

Thus, a need exists for a method for embossing a tapered polymer sheet or tapered interlayer that results in the formation of consistent, desirable roughness levels and patterns. Ideally, multiple layer panels formed from interlayers embossed according to such a method would exhibit optimal deairing performance, while resulting in laminates with desirable visual, optical, and, if desired, acoustic properties.

**SUMMARY**

One embodiment of the present invention concerns a polymeric sheet suitable for producing an interlayer. The sheet comprises at least one polymeric resin and the sheet comprises at least one tapered zone and at least one substantially flat zone. The tapered zone has a wedge angle of at least 0.10 mrad and the substantially flat zone has a wedge angel of less than 0.05 mrad. The sheet comprises at least one embossed surface and at least 75 percent of the embossed surface has an $R_z$ value within 25 percent of the average $R_z$ value for the entire embossed surface.

Another embodiment of the present invention concerns a polymeric sheet suitable for producing an interlayer. The sheet comprises at least one polymeric resin and at least two angled zones, each having a wedge angle of at least 0.1 mrad. The sheet exhibits one or more of the following characteristics: (i) the two angled zones have different wedge angles; (ii) the two angled zones are oppositely sloped; and (iii) the sheet comprises at least one substantially flat zone having a wedge angle of less than 0.05 mrad. The sheet comprises at least one embossed surface and at least 75 percent of the embossed surface has an $R_z$ value within 25 percent of the average $R_z$ value for the entire embossed surface.

Yet another embodiment of the present invention concerns a method of making an interlayer. The method comprises providing at least one pair of rollers defining a nip therebetween, wherein at least one of the rollers comprises an embossing surface, passing a polymeric sheet between the rollers through the nip; during the passing, contacting the polymeric sheet with at least a portion of the embossing surface under conditions sufficient to form an embossed region on at least a portion of at least one surface of the polymeric sheet. The polymeric sheet includes at least one tapered zone having a minimum wedge angle of at least 0.1 mrad. The angle defined between the axes of rotation of each of the rollers is less than the minimum wedge angle.

## BRIEF DESCRIPTION OF THE DRAWINGS

Various embodiments of the present invention are described in detail below with reference to the attached drawing Figures, wherein:

FIG. 1 is a graphical representation of how surface roughness, $R_z$, is measured in accordance with DIN ES ISO-4287 of the International Organization for Standardization and ASME B46.1 of the American Society of Mechanical Engineers;

FIG. 2 is a cross-sectional view of a tapered interlayer configured according to at least one embodiment of the present invention, where various features of the tapered interlayer are labeled for ease of reference;

FIG. 3 is a cross-sectional view of a tapered interlayer having a tapered zone that extends over the entire width of the interlayer, where the entire tapered zone has a constant wedge angle and a linear thickness profile;

FIG. 4 is a cross-sectional view of a tapered interlayer having a tapered zone that extends over part of the width of the interlayer and a region of constant thickness that extends over part of the width of the interlayer, where the tapered zone includes a constant angle zone and a variable angle zone;

FIG. 5 is a cross-sectional view of a tapered interlayer having a tapered zone that extends over part of the width of the interlayer and two regions of constant thickness that extend over part of the width of the interlayer, where the tapered zone includes a constant angle zone and two variable angle zones;

FIG. 6 is a cross-sectional view of a tapered interlayer having a tapered zone that extends over part of the width of the interlayer and two regions of constant thickness that extend over part of the width of the interlayer, where the tapered zone is formed entirely of a variable angle zones having a curved thickness profile;

FIG. 7 is a cross-sectional view of a tapered interlayer having a tapered zone that extends over the entire width of the interlayer, where the tapered includes three constant angle zones spaced from one another by two variable angle zones;

FIG. 8 is a cross-sectional view of a tapered interlayer having a tapered zone that extends over part of the width of the interlayer and two regions of constant thickness that extend over part of the width of the interlayer, where the tapered zone includes three constant angle zone and four variable angle zones;

FIG. 9 is a cross-sectional view of a tapered polymer sheet including two similarly shaped, but oppositely sloped, tapered zones, having a thin central flat zone disposed between the two tapered zones, where various features of the tapered sheet are labeled for ease of reference;

FIG. 10 is a cross-sectional view of a tapered polymer sheet including two similarly shaped, but oppositely sloped, tapered zones, having a thick central flat zone disposed between the two tapered zones, where various features of the tapered sheet are labeled for ease of reference;

FIG. 11 is a cross-section of a pair of embossing rollers suitable for use in embossing a polymer sheet according to various embodiments of the present invention;

FIG. 12 is a partial perspective view of the pair of embossing rollers shown in FIG. 11, particularly illustrating the relative orientation of the axes of rotation of each roller;

FIG. 13a is a plan view of a tapered interlayer configured for use in a vehicle windshield, where the thickness profile of the interlayer is similar to the thickness profile of the interlayer depicted in FIG. 3; and

FIG. 13b is a cross-sectional view of the interlayer of FIG. 13a, showing the thickness profile of the interlayer.

## DETAILED DESCRIPTION

Polymeric resin sheets and interlayers suitable for use in multiple layer panels, including safety glass panels, are described herein. According to some embodiments, the polymer sheets and interlayers of the present invention may include at least one tapered portion or zone. As used herein, the term "tapered" refers to an area of non-uniform or changing thickness in a polymer sheet or interlayer. In some embodiments, a tapered zone may have a generally wedge-shaped profile, such that the thickness of the tapered zone changes along at least a portion of its length and/or width, and one edge of the tapered zone has a thickness greater than the other. At least one wedge angle defined by the tapered zone may be substantially constant or it may be variable, and the tapered zone can have a linear and/or curved thickness profile. Additional embodiments of polymer sheets and interlayers having at least one tapered zone will be discussed in detail shortly. Polymer sheets and interlayers as described herein may be useful in various types of multiple layer panels including, for example, in heads-up-display (HUD) panels for use in automotive and aircraft applications.

As used herein, the terms "polymer resin sheet" and "resin sheet" refer to one or more polymer resins, optionally combined with one or more plasticizers, that have been formed into a sheet. Polymer sheets may further include one or more additional additives and may comprise one or more resin layers. In some embodiments, the polymer sheet may be an intermediate polymer resin sheet used to form one or more of the interlayers described herein. As used herein, the term "interlayer" refers to a single or multiple layer polymer sheet that may be suitable for use with at least one rigid substrate to form a multiple layer panel. The term "monolithic" interlayer refers to an interlayer formed of a single polymer sheet, while the terms "multiple layer" and "multilayer" refer to interlayers having two or more resin layers, stacked upon one another, that are coextruded, laminated, or otherwise coupled to each other.

In addition to including at least one tapered zone, polymer sheets and interlayers described herein may also comprise at least one substantially flat zone having opposite sides that form a wedge angle of less than 0.05 mrad. The substantially flat zone may have a wedge angle of less than 0.025 mrad, less than 0.010 mrad, or zero. The substantially flat zone may have a uniform thickness.

In some embodiments, a polymer sheet or interlayer can include at least about 1, at least about 2, at least about 3, at least about 4, or more substantially flat zones, which may be positioned adjacent to one or more tapered zones of the sheet or interlayer. In some embodiments, the polymer sheet or interlayer may include no flat zones. When present, the substantially flat zone can form the thinnest portion of the sheet or interlayer, or the flat zone can form the thickest portion of the sheet or interlayer. If a sheet or interlayer includes two or more flat zones, at least one flat zone can form the thinnest portion of the sheet or interlayer and at least one other flat zone may form the thickest portion of the sheet or interlayer. Specific examples of polymer sheets and interlayers having at least one tapered zone and at least one optional flat zone will be discussed in detail shortly, with respect to the Figures.

According to some embodiments of the present invention, the polymer sheet or interlayer, which may include at least one tapered zone and, optionally, at least one flat zone, may have at least one surface that comprises a region of enhanced surface roughness. Such roughness may be produced by, for example, melt fracturing the polymer sheet during its formation and/or by post-formation processing, such as, for example, embossing. When the region of enhanced surface roughness is formed by embossing, it may be referred to as an "embossed surface region." When at least one surface of the polymer sheet or interlayer includes an embossed surface region, the total surface area of the embossed region may be at least about 50, at least about 60, at least about 70, at least about 75, at least about 80, at least about 85, at least about 90, at least about 95, or at least about 97 percent of the total area of at least one surface of the polymer sheet or interlayer. In some embodiments, less than about 5, less than about 3, less than about 2, or less than about 1 percent of the total area of at least one surface of the polymer sheet or interlayer may not be embossed.

The embossed surface region of the sheet or interlayer may have a surface roughness, measured by $R_z$, of at least about 10, at least about 15, at least about 20, at least about 25, at least about 30, or at least about 35 microns ($\mu$m) and/or not more than about 120, not more than about 100, not more than about 80, or not more than about 75 $\mu$m, or it can have a surface roughness in the range of from about 10 to about 120 $\mu$m, about 15 to about 100 $\mu$m, or about 20 to about 90 $\mu$m. The surface roughness, $R_z$, of the surface of the polymer sheet is measured by a 10-point average roughness in accordance with DIN ES ISO-4287 of the International Organization for Standardization and ASME B46.1 of the American Society of Mechanical Engineers. In general, under these scales, $R_z$ is calculated as the arithmetic mean value of the single roughness depths $R_{zi}$ (i.e., the vertical distance between the highest peak and the deepest valley within a sampling length) of consecutive sampling lengths:

$$R_z = \frac{1}{N} \times (R_{z1} + R_{z2} + \ldots + R_{zn})$$

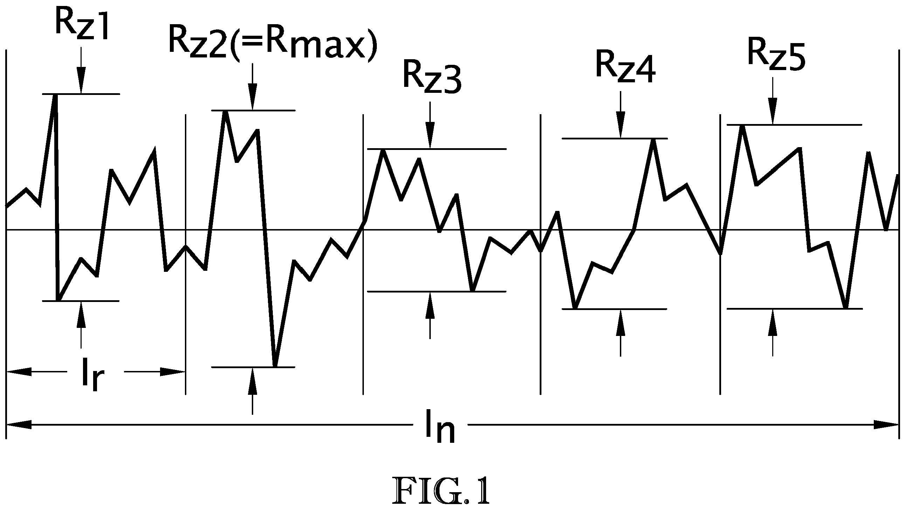

A graphical depiction of the calculation of an $R_z$ value in accordance with DIN ES ISO-4287 of the International Organization for Standardization and ASME B46.1 of the American Society of Mechanical Engineers is provided in FIG. 1. In the calculation, the length of each trace ($l_R$) is 17.5 millimeters composed of seven sequential sample lengths ($l_c$) of 2.5 millimeters each. The measuring length ($l_m$) is 12.5 millimeters and is composed of five sequential sample lengths ($l_c$), obtained by eliminating the first and last sections of each trace.

In some embodiments of the present invention, the roughness of the embossed surface region of the polymer sheet or interlayer may be substantially uniform. For example, at least about 75 percent of the embossed surface region can have a surface roughness within about 25 percent of the average $R_z$ value for the entire embossed surface region. In other words, at least 75 percent of the embossed surface region can have a surface roughness that is not more than 25 percent higher and not more than 25 percent lower than the average $R_z$ value for the entire embossed surface region.

In certain embodiments, at least about 80, at least about 85, at least about 90, at least about 95, or at least about 97 percent of the embossed surface region can have a surface roughness within about 25 percent, within about 20, within about 15, within about 10, or within about 5 percent of the average Rz value of the entire embossed surface region. In certain embodiments, at least about 80, at least about 85, at least about 90, or at least about 95 percent of the embossed surface region can have a surface roughness within about 25 percent of the average $R_z$ value of the entire embossed surface region, and, in some embodiments, at least about 75 percent of the embossed surface region can have a surface roughness within about 20, within about 15, within about 10, or within about 5 percent of the average $R_z$ value of the entire embossed surface region. In some embodiments, at least about 90 percent of the embossed surface region can have a surface roughness within about 15 percent of the average $R_z$ value of the entire embossed surface region.

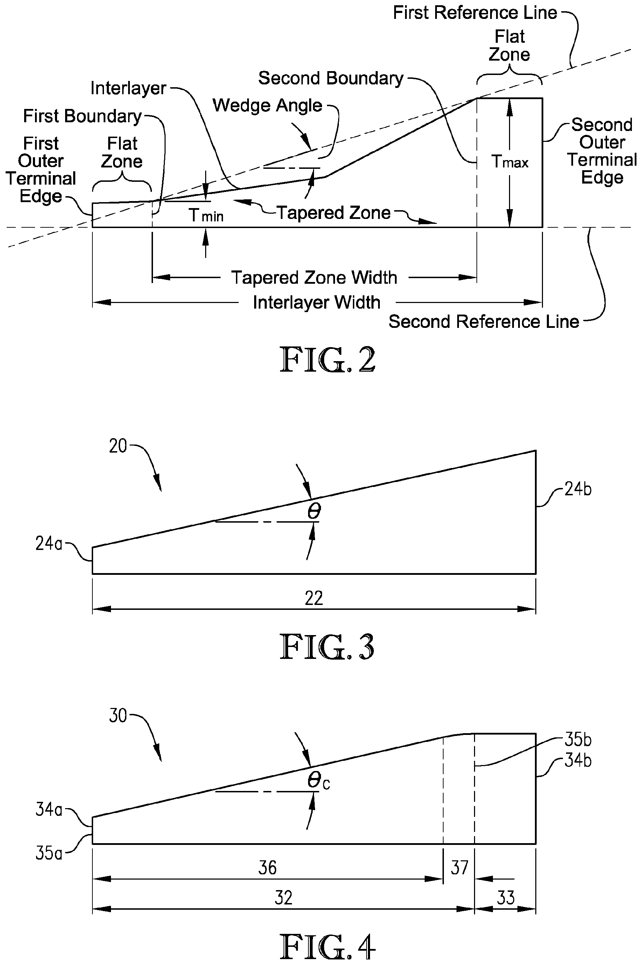

Turning now to FIG. 2, a cross-sectional view of an exemplary tapered interlayer is provided. As shown in FIG. 2, the tapered zone of the interlayer has a minimum thickness, $T_{min}$, measured at a first boundary of the tapered zone and a maximum thickness, $T_{max}$, measured at a second boundary of the tapered zone. In certain embodiments, $T_{min}$ can be at least about 0.25, at least about 0.40, or at least about 0.60 millimeters (mm) and/or not more than 1.2, not more than about 1.1, or not more than about 1.0 mm. Further, $T_{min}$ can be in the range of 0.25 to 1.2 mm, 0.4 to 1.1 mm, or 0.60 to 1.0 mm. In certain embodiments, $T_{max}$ can be at least about 0.38, at least about 0.53, or at least about 0.76 mm and/or not more than 2.2, not more than about 2.1, or not more than about 2.0 mm. Further, $T_{max}$ can be in the range of 0.38 to 2.2 mm, 0.53 to 2.1 mm, or 0.76 to 2.0 mm. In certain embodiments, the difference between Tmax and Tmin can be at least about 0.13, at least about 0.15, at least about 0.2, at least about 0.25, at least about 0.3, at least about 0.35, at least about 0.4 mm and/or not more than 1.2, not more than about 0.9, not more than about 0.85, not more than about 0.8, not more than about 0.75, not more than about 0.7, not more than about 0.65, or not more than about 0.6 mm. Further, the difference between Tmax and Tmin can be in the range of 0.13 to 1.2 mm, 0.25 to 0.75 mm, or 0.4 to 0.6 mm. In certain embodiments, the distance between the first and second boundaries of the tapered zone (i.e. the "tapered zone width") can be at least about 5, at least about 10, at least about 15, at least about 20, or at least about 30 centimeters (cm) and/or not more than about 200, not more than about 150, not more than about 125, not more than about 100 or not more than about 75 cm. Further, the tapered zone width can be in the range of 5 to 200 cm, 15 to 125 cm, or 30 to 75 cm.

As shown in FIG. 2, the tapered interlayer includes opposite first and second outer terminal edges. In certain embodiments, the distance between the first and second outer terminal edges (i.e., the "interlayer width") can be at least about 20, at least about 40, or at least about 60 cm and/or not more than about 400, not more than about 200, or not more than about 100 cm. Further the interlayer width can be in the range of 20 to 400 cm, 40 to 200 cm, or 60 to 100 cm. In the embodiment depicted in FIG. 2, the first and second boundaries of the tapered zone are spaced inwardly from the first and second outer terminal edges of the interlayer. In such embodiments, only a portion of the interlayer is tapered. When the tapered zone forms only a portion of the interlayer, the ratio of the interlayer width to the tapered zone width can be at least about 0.05:1, at least about 0.1:1, at least about 0.2:1, at least about 0.3:1, at least about 0.4:1 at least about 0.5:1, at least about 0.6:1, or at least about 0.7:1 and/or not more than about 1:1, not more than about 0.95:1, not more than about 0.9:1, not more than about 0.8:1, or not more than about 0.7:1. Further, the ratio of interlayer width to the tapered zone width can be in the range of 0.05:1 to 1:1 or 0.3:1 to 0.9:1. In an alternative embodiment, discussed below, the entire interlayer may be tapered. When the entire interlayer is tapered, the tapered zone width is equal to the interlayer width and the first and second boundaries of the tapered zone are located at the first and second outer terminal edges, respectively. According to such embodiments, the interlayer may have no flat zones.

As illustrated in FIG. 2, the tapered zone of the interlayer has a wedge angle, which is defined as the angle formed between a first reference line extending through two points of the interlayer where the first and second tapered zone boundaries intersect a first (upper) surface of the interlayer and a second reference line extending through two points where the first and second tapered zone boundaries intersect a second (lower) surface of the interlayer. In certain embodiments, the wedge angle of the tapered zone can be at least about 0.10, at least about 0.13, at least about 0.15, at least about 0.2, at least about 0.25, at least about 0.3, at least about 0.35, at least about 0.4 milliradians (mrad) and/or not more than about 1.2, not more than about 1.0, not more than about 0.9, not more than about 0.85, not more than about 0.8, not more than about 0.75, not more than about 0.7, not more than about 0.65, or not more than about 0.6 mrad. Further, the wedge angle of the tapered zone can be in the range of 0.13 to 1.2 mrad, 0.25 to 0.75 mrad, or 0.4 to 0.6 mrad.

When the first and second surfaces of the tapered zone are each planar, the wedge angle of the tapered zone is simply the angle between the first (upper) and second (lower) surfaces. In some embodiments, the wedge angle can be a substantially constant wedge angle having a linear thickness profile. However, as discussed in further detail below, in certain embodiments, the tapered zone can include at least one variable angle zone having a curved thickness profile and a continuously varying wedge angle. Further, in certain embodiments, the tapered zone can include two or more constant angle zones. In these embodiments, each of the constant angle zones may have a linear thickness profile, but at least two of the constant angle zones can have different wedge angles.

As shown in FIG. 2, the interlayer is depicted as including a pair of flat zones located between the tapered zone and the first and second outer terminal edges. The first flat zone, disposed between the first outer terminal edge and the tapered zone, forms the thinnest part of the interlayer. As shown in FIG. 2, the first flat zone has a thickness approximately equal to the minimum thickness of the tapered layer, $T_{min}$. The second flat zone, disposed between the tapered zone and the second outer terminal edge of the interlayer shown in FIG. 2, forms the thickest part of the interlayer. As shown in FIG. 2, the second flat zone has a thickness approximately equal to the maximum thickness of the tapered layer, $T_{max}$. Each of the first and second flat zones can have wedge angles of less than 0.10, less than about 0.05, or zero because, as shown in FIG. 2, the top and bottom surfaces of each flat zone are parallel to one another. In certain embodiments, at least one of the first and second flat zones shown in FIG. 2 could be absent from the interlayer.

Turning now to FIGS. 3-8, various tapered interlayers configured according several embodiments of the present invention are illustrated. FIG. 3 depicts an interlayer 20 that includes a tapered zone 22 extending entirely from a first outer terminal edge 24a of the interlayer 20 to a second outer terminal edge 24b of the interlayer 20. In this configuration, the first and second boundaries of the tapered zone are located at the first and second outer terminal edges 24a,b of the interlayer. The entire tapered zone 22 of the interlayer 20 depicted in FIG. 3 has a constant wedge angle $\Theta$ that is simply the angle formed between the planar first (upper) and second (lower) planar surfaces of the interlayer 20.

FIG. 4 illustrates an interlayer 30 that includes a tapered zone 32 and flat zone 33. The first boundary 35a of the tapered zone 32 is located at the first outer terminal edge 34a of the interlayer 30, while the second boundary 35b of the tapered zone 32 is located where the tapered zone 32 and the flat zone 33 meet. The tapered zone 32 includes two angled zones having different wedge angles, shown in FIG. 4 as a constant angle zone 36 and a variable angle zone 37. The constant angle zone 36 has a linear thickness profile and a substantially constant wedge angle,

$$\Theta_c$$

, while the variable angle zone 37 has a curved thickness profile and a continuously varying wedge angle. The starting wedge angle of the variable angle zone 37 is equal to the constant wedge angle

$$\Theta_c$$

and the ending wedge angle of the variable angle zone 37 is zero. The interlayer 30 depicted in FIG. 4 has a constant wedge angle

$$\Theta_c$$

that is greater than the overall wedge angle of the entire tapered zone 32.

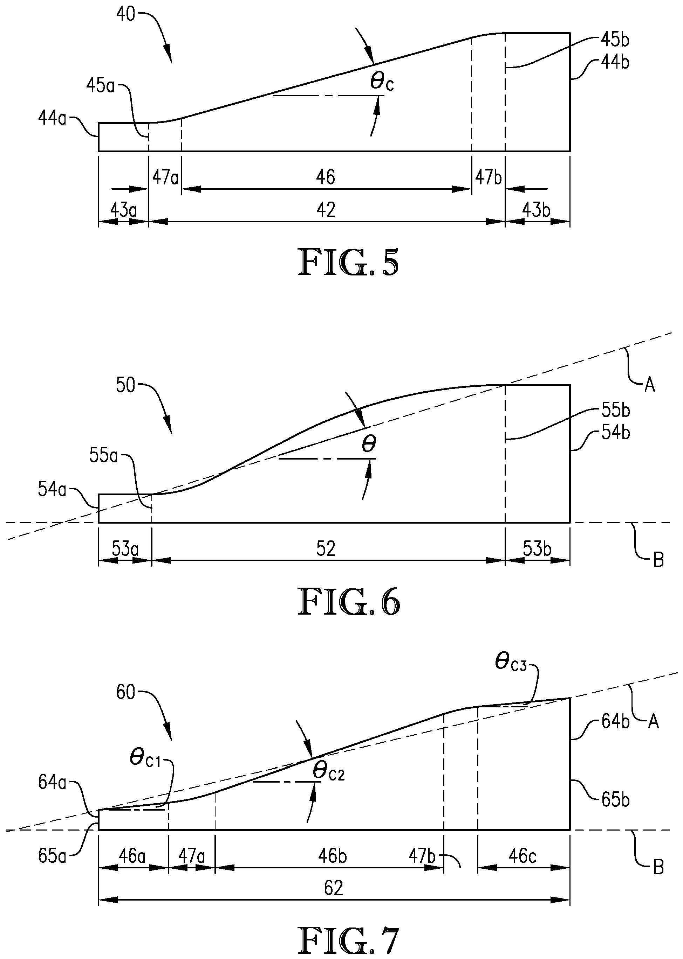

FIG. 5 illustrates an interlayer 40 that includes a tapered zone 42 located between first and second flat zones 43a,b. The first boundary 45a of the tapered zone 42 is located where the tapered zone 42 and the first flat zone 43a meet, while the second boundary 45b of the tapered zone 42 is located where the tapered zone 42 and the flat zone 43b meet. The tapered zone 42 includes a constant angle zone 46 located between first and second variable angle zones 47a,b. The first variable angle zone 47a forms a transition zone between the first region of constant thickness 43a and the constant angle zone 46. The second variable angle zone 47b forms a transition zone between the second region of constant thickness 43b and the constant angle zone 46. The constant angle zone 46 has a linear thickness profile and a constant wedge angle, $\Theta_c$, while the first and second variable angle zones 47a,b have curved thickness profiles and continuously varying wedge angles. The starting wedge angle of the first variable angle zone 47a is equal to zero and the ending wedge angle of the first variable angle zone 47b is equal to the constant wedge angle $\Theta_c$. The starting wedge angle of the second variable angle zone 47b is equal to the constant wedge angle $\Theta_c$ and the ending wedge angle of the second variable angle zone 47b is zero. The interlayer 40 depicted in FIG. 5 has a constant wedge angle $\Theta_c$ that is greater than the overall wedge angle of the entire tapered zone 42.

FIG. 6 illustrates an interlayer 50 that includes a tapered zone 52 located between first and second regions of constant thickness 53a,b. The tapered zone 52 of the interlayer 50 does not include a constant angle zone. Rather, the entire tapered zone 52 of the interlayer 50 is a variable angle zone having a curved thickness profile and a continuously varying wedge angle. As described above, the overall wedge angle, $\Theta$, of the tapered zone 52 is measured as the angle between a first reference line "A" extending through the two points where the first and second boundaries 55a,b of the tapered zone 52 meet the first (upper) surface of the interlayer 50 and a second reference line "B" extending through the two points where the first and second boundaries 55a,b of the tapered zone 52 meet the second (lower) surface of the interlayer 50. However, within the tapered zone 52, the curved thickness profile provides an infinite number of wedge angles, which can be greater than, less than, or equal to the overall wedge angle $\Theta$ of the entire tapered zone 52.

FIG. 7 illustrates an interlayer 60 that does not include flat zones. Rather, the tapered zone 62 of the interlayer 60 forms the entire interlayer 60. Thus, the first and second boundaries 65a,b of the tapered zone 60 are located at the first and second outer terminal edges 64a,b of the interlayer 60. The tapered zone 62 of the interlayer 60 includes more than two angled zones having different wedge angles, shown in FIG. 7 as first, second, and third constant angle zones 46a,b,c, which are separated by first and second variable angle zones 47a,b. The first, second, and third constant angle zones 46a,b,c each have a linear thickness profile and each have unique first, second, and third constant wedge angles,

$$\Theta_{ca}, \Theta_{c2}, \Theta_{c3}$$

, respectively The first variable angle zone 47a acts as a transition zone between the first and second constant angle zones 46a,b. The second variable angle zone 47b acts as a transition zone between the second and third constant angle zones 46b,c. As discussed above, the overall wedge angle, $\Theta$, of the tapered zone 62 is measured as the angle between a first reference line "A" and a second reference line "B." The first constant wedge angle

$$\Theta_{c1}$$

is less than the overall wedge angle $\Theta$ of the tapered zone 62. The second constant wedge angle

$$\Theta_{c2}$$

is greater the overall wedge angle $\Theta$ of the tapered zone 62. The third constant wedge angle

$$\Theta_{c3}$$

is less than the overall wedge angle $\Theta$ of the tapered zone 62. The wedge angle of the first variable angle zone 47a continuously increases from the first constant wedge angle

$$\Theta_{c1}$$

to the second constant wedge angle,

$$\Theta_{c2}$$

. The wedge angle of the second variable angle zone 47b continuously decreases from the second constant wedge angle

$$\Theta_{c2}$$

to the third wedge angle $\Theta_{c3}$ .

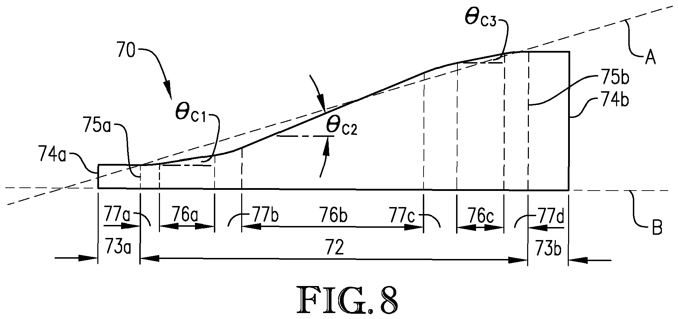

FIG. 8 illustrates an interlayer 70 that includes a tapered zone 72 located between first and second regions of constant thickness 73a,b. The first and second boundaries 75a,b of the tapered zone 72 are spaced inwardly from the first and second outer terminal edges 74a,b of the interlayer 70. The tapered zone 72 of the interlayer 70 can include two or more angled zones having different wedge angles and may, as shown in FIG. 8, include first, second, third, and fourth variable angle zones 77a,b,c,d and first, second, and third constant angle zones 76a,b,c. The first variable angle zone 77a acts as a transition zone between the first region of constant thickness 73a and the first constant angle zone 76a. The second variable angle zone 77b acts as a transition zone between the first constant angle zone 76a and the second constant angle zone 76b. The third variable angle zone 77c acts as a transition zone between the second constant angle zone 76b and the third constant angle zone 76c. The fourth variable angle zone 77d acts as a transition zone between the third constant angle zone 76c and the second region of constant thickness 73b. The first, second, and third constant angle zones 76a,b,c each have a linear thickness profile and each have unique first, second, and third constant wedge angles,

$$\Theta_{ca}, \Theta_{c2}, \Theta_{c3}$$

, respectively As discussed above, the first, second, third, and fourth variable angle zones 77a,b,c,d have wedge angles that continuously transition from the wedge angle of the constant angle zone on one side of the variable angle zone 77 to the wedge angle of the constant angle zone on the other side of the variable angle zone 77.

As discussed above, the tapered interlayer can include one or more angled zones, each having a width that is less than the overall width of the entire tapered zone and each having a wedge angle that is the same as or different than the overall wedge angle of the entire tapered zone. For example, the tapered zone can include one, two, three, four, five, or more angled zones, which may be substantially constant angle zones and/or variable angle zones. When multiple constant angle zones are employed, the constant angle zones can be separated from one another by variable angle zones that serve to transition between adjacent constant angle zones.

In certain embodiments, the width of each angled zone, including, for example, each constant angle zone, can be at least about 2, at least about 5, at least about 10, at least about 15, or at least about 20 cm and/or not more than about 150, not more than about 100, or not more than about 50 cm. In certain embodiments, the ratio of the width of each angled zone or each constant angle zone to the overall width of the entire tapered zone can be at least about 0.1:1, at least about 0.2:1, at least about 0.3:1 or at least about 0.4:1 and/or not more than about 0.9:1, not more than about 0.8:1, not more than about 0.7:1, not more than about 0.6:1, or not more than about 0.5:1.

In certain embodiments, the wedge angle of each constant angle zone can be at least about 0.10, at least about 0.13, at least about 0.15, at least about 0.2, at least about 0.25, at least about 0.3, at least about 0.35, or at least about 0.4 mrad and/or not more than about 1.2, not more than about 1.0, not more than about 0.9, not more than about 0.85, not more than about 0.8, not more than about 0.75, not more than about 0.7, not more than about 0.65, or not more than about 0.6 mrad. Further, the wedge angle of each constant angle zone can be in the range of 0.13 to 1.2 mrad, 0.25 to 0.75 mrad, or 0.4 to 0.6 mrad. In certain embodiments, the wedge angle of at least one constant angle zone is at least about 0.01, at least about 0.05, at least about 0.1, at least about 0.2, at least about 0.3, or at least about 0.4 mrad greater than the overall wedge angle of the entire tapered zone. In certain embodiments, the wedge angle of at least one constant angle zone is at least about 0.01, at least about 0.05, at least about 0.1, at least about 0.2, at least about 0.3, or at least about 0.4 mrad less than the overall wedge angle of the entire tapered zone. In certain embodiments, the wedge angle of at least one constant angle zone is not more than about 0.4, not more than about 0.3, not more than about 0.2, not more than about 0.1, not more than about 0.05, or not more than about 0.01 mrad greater than the overall wedge angle of the entire tapered zone. In certain embodiments, the wedge angle of at least one constant angle zone is not more than about 0.4, not more than about 0.3, not more than about 0.2, not more than about 0.1, not more than about 0.05, or not more than about 0.01 mrad less than the overall wedge angle of the entire tapered zone.

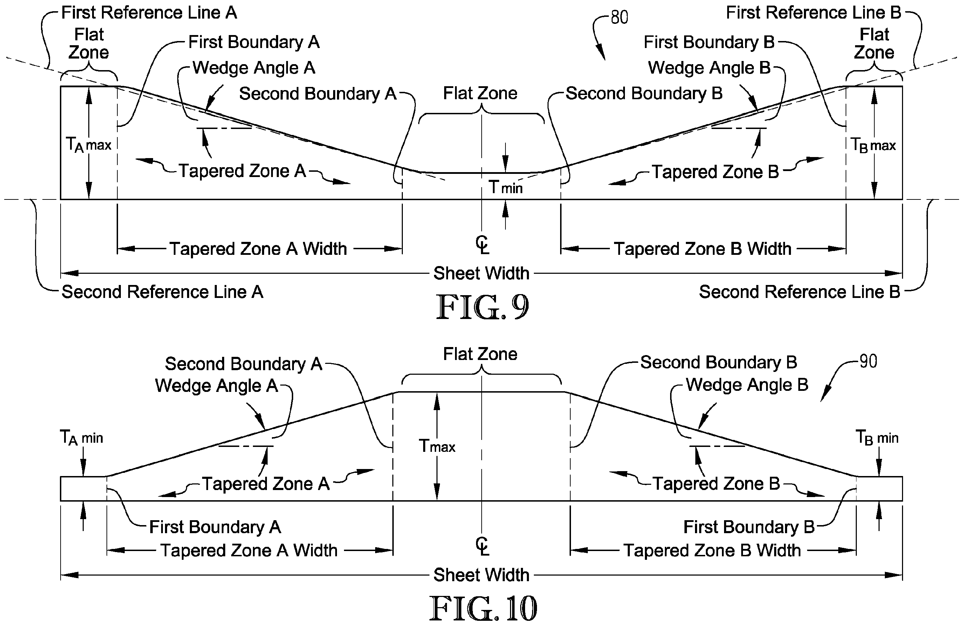

Turning now to FIGS. 9 and 10, two polymer resin sheets configured according to embodiments of the present invention are provided. Each polymer sheet 80 and 90 shown in respective FIGS. 9 and 10 includes oppositely sloped tapered zones, shown as Tapered Zones A and B, and at least one flat zone. Each tapered zone of sheets 80 and 90 is defined between a pair of first and second boundary line and includes at least one wedge angle. The dimensions of the tapered zones, including the values for the maximum (TAmax and TBmax in FIG. 9 and Tmax in FIG. 10) thickness and minimum (Tmin in FIG. 9 and $T_{Amin}$ and $T_{Bmin}$ in FIG. 10) thickness, and the types and ranges for each wedge angle may fall within one or more of the ranges described previously. In some embodiments, polymer sheets 80 and 90 can be symmetric about the center line, as shown in FIGS. 9 and 10, such that the tapered zone on one side of the center line is a mirror-image of the other tapered zone. In other embodiments, the shapes of tapered zones A and B may be different, such that the sheet is not symmetric about its center line. Although shown in FIGS. 9 and 10 as having profiles similar to the interlayer depicted in FIG. 5, it should be understood that the profile of the tapered zones of a polymer sheet configured according to embodiments of the present invention can be any suitable shape, including one or more of the shapes illustrated in FIGS. 3-8 above.

As shown in FIGS. 9 and 10, polymer sheets 80 and 90 each comprise a central flat zone disposed between the oppositely-sloped Tapered Zones A and B. When the tapered zones of a polymer sheet are oppositely angled toward one another, as shown in FIG. 9, the central flat zone disposed between the two tapered zones may form the thinnest portion of the sheet. Alternatively, when the tapered zones are oppositely angled away from one another, as shown in FIG. 10, the central flat zone may form the thickest portion of the sheet. Additionally, as shown in FIGS. 9 and 10, polymer sheets 80 and 90 can further comprise a pair of outer flat zones that are spaced from one another and located on opposite sides of the center line. The outer flat zones may form the thickest portion of the sheet, as shown in FIG. 9, or the thinnest portion of the sheet, as shown in FIG. 10. Although shown as including two tapered zones in FIGS. 9 and 10, polymer sheets as described herein may include at least about 3, at least about 4, or at least about 5 tapered zones, configured similarly to one or both of the embodiments shown in FIGS. 9 and 10. Alternatively, one or more of the outer flat zones may be absent from polymer sheets 80 and/or 90.

The polymer resin sheets and interlayers described herein may comprise at least one polymeric resin. The resin may be any suitable polymer including, for example, one or more thermoplastic polymers. Examples of suitable thermoplastic polymers can include, but are not limited to, poly(vinyl acetal) resins, polyurethanes (PU), poly(ethylene-co-vinyl) acetates (EVA), polyvinyl chlorides (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolomers and ionomers thereof, derived from any of the previously-listed polymers, and combinations thereof. In some embodiments, the thermoplastic polymer can be selected from the group consisting of poly(vinyl acetal) resins, polyvinyl chloride, and polyurethanes, or the resin can comprise one or more poly(vinyl acetal) resins.

When the polymer sheets or interlayers described herein comprise at least one poly(vinyl acetal) resin, the poly(vinyl acetal) resin may be formed according to any suitable method. Poly(vinyl acetal) resins can be formed by acetalization of polyvinyl alcohol with one or more aldehydes in the presence of an acid catalyst. The resulting resin can then be separated, stabilized, and dried according to known methods such as, for example, those described in U.S. Patent Nos. 2,282,057 and 2,282,026, as well as "Vinyl Acetal Polymers," in the Encyclopedia of Polymer Science & Technology, 3rd ed., Volume 8, pages 381-399, by B.E. Wade (2003). The resulting poly(vinyl acetal) resins may have a total percent acetalization of at least about 50, at least about 60, at least about 70, at least about 75, at least about 80, or at least about 85 weight percent, measured according to ASTM D-1396, unless otherwise noted. The total amount of aldehyde residues in a poly(vinyl acetal) resin can be collectively referred to as the acetal component, with the balance of the poly(vinyl acetal) resin being residual hydroxyl and residual acetate groups, which will be discussed in further detail below.

The poly(vinyl acetal) resin can include residues of any suitable aldehyde and, in some embodiments, can include residues of at least one $C_1$ to $C_{10}$ aldehyde, at least one $C_4$ to $C_8$ aldehyde. Examples of suitable $C_4$ to $C_8$ aldehydes can include, but are not limited to, n-butyraldehyde, isobutyraldehyde, 2-methylvaleraldehyde, n-hexyl aldehyde, 2-ethylhexyl aldehyde, n-octyl aldehyde, and combinations thereof. The poly(vinyl acetal) resin can include at least about 20, at least about 30, at least about 40, at least about 50, at least about 60, or at least about 70 weight percent of residues of at least one $C_4$ to $C_8$ aldehyde, based on the total weight of aldehyde residues of the resin, and/or can include not more than about 90, not more than about 85, not more than about 80, not more than about 75, not more than about 70, or not more than about 65 weight percent of at least one $C_4$ to $C_8$ aldehyde, or in the range of from about 20 to about 90 weight percent, about 30 to about 80 weight percent, or about 40 to about 70 weight percent of at least one $C_4$ to $C_8$ aldehyde. The $C_4$ to $C_8$ aldehyde may be selected from the group listed above, or it can be selected from the group consisting of n-butyraldehyde, isobutyraldehyde, 2-ethylhexyl aldehyde, and combinations thereof.

When the poly(vinyl acetal) resin is a poly(vinyl n-butyral) (PVB) resin, greater than 90, at least about 95, at least about 97, or at least about 99 percent, by weight, of the acetal component, or total aldehyde residues, can comprise residues of n-butyraldehyde. Additionally, a poly(vinyl n-butyral) resin may comprise less than 10, not more than about 5, not more than about 2, not more than about 1, or not more than about 0.5 weight percent of residues of an aldehyde other than n-butyraldehyde, based on the total weight of aldehyde residues of that resin.

In some embodiments, when present, the poly(vinyl acetal) resin in the polymer sheet or interlayer can have a residual hydroxyl content and an residual acetate content within one or more ranges provided herein. As used herein, the terms "residual hydroxyl content" and "residual acetate content" refer to the amount of hydroxyl and acetate groups, respectively, that remain on a resin after processing is complete. For example, polyvinyl n-butyral can be produced by hydrolyzing polyvinyl acetate to polyvinyl alcohol, and then acetalizing the polyvinyl alcohol with n-butyraldehyde to form polyvinyl n-butyral. In the process of hydrolyzing the polyvinyl acetate, not all of the acetate groups are converted to hydroxyl groups, and residual acetate groups remain on the resin. Similarly, in the process of acetalizing the polyvinyl alcohol, not all of the hydroxyl groups are converted to acetal groups, which also leaves residual hydroxyl groups on the resin. As a result, most poly(vinyl acetal) resins include both residual hydroxyl groups (as vinyl hydroxyl groups) and residual acetate groups (as vinyl acetate groups) as part of the polymer chain. The residual hydroxyl content and residual acetate content are expressed in weight percent, based on the weight of the polymer resin, and are measured according to ASTM D-1396, unless otherwise noted.

In certain embodiments, the resin used to form the poly(vinyl acetal) resin particles described herein can have a residual hydroxyl content of at least about 14, at least about 14.5, at least about 15, at least about 15.5, at least about 16, at least about 16.5, at least about 17, at least about 17.5, at least about 18, at least about 18.5, at least about 19, or at least about 19.5 and/or not more than about 45, not more than about 40, not more than about 35, not more than about 33, not more than about 30, not more than about 27, not more than about 25, not more than about 22, not more than about 21.5, not more than about 21, not more than about 20.5, or not more than about 20 weight percent, or in the range of from about 14 to about 45 weight percent, about 16 to about 30 weight percent, about 18 to about 25 weight percent, about 18.5 to about 20 weight percent, or about 19.5 to about 21 weight percent. In certain embodiments, the poly(vinyl acetal) resin can have a residual hydroxyl content of at least about 8, at least about 9, at least about 10, or at least about 11 weight percent and/or not more than about 16, not more than about 14.5, not more than about 13, not more than about 11.5, not more than about 11, not more than about 10.5, not more than about 10, not more than about 9.5, or not more than about 9 weight percent, or in the range of from about 8 to about 16 weight percent, about 9 to about 15 weight percent, or about 9.5 to about 14.5 weight percent.

The residual acetate content of the poly(vinyl acetal) resin can be, for example, not more than about 25, not more than about 20, not more than about 15, not more than about 12, not more than about 10, not more than about 8, not more than about 5, not more than about 2, or not more than about 1 weight percent, and/or the poly(vinyl acetal) resin can have an acetate content of at least about 1, at least about 2, at least about 3, at least about 5, at least about 10, at least about 12, or at least about 15 weight percent.

In addition to a poly(vinyl acetal) resin, the polymer sheet may further include at least one plasticizer. The plasticizer can be present in the sheet or interlayer in an amount of at least about 5, at least about 10, at least about 15, at least about 20, at least about 25, at least about 30, at least about 35, at least about 40, at least about 45, at least about 50, at least about 55, at least about 60, at least about 65, or at least about 70 parts per hundred parts of resin (phr) and/or not more than about 120, not more than about 110, not more than about 105, not more than about 100, not more than about 95, not more than about 90, not more than about 85, not more than about 75, not more than about 70, not more than about 65, not more than about 60, not more than about 55, not more than about 50, not more than about 45, or not more than about 40 phr, or in the range of from about 5 to about 120 phr, about 10 to about 110 phr, about 20 to about 90 phr, or about 25 to about 75 phr.

As used herein, the term "parts per hundred parts of resin" or "phr" refers to the amount of plasticizer present as compared to one hundred parts of resin, on a weight basis. For example, if 30 grams of plasticizer were added to 100 grams of a resin, the plasticizer would be present in an amount of 30 phr. If the resin sheet or interlayer includes two or more resins, the weight of plasticizer is compared to the combined amount of the resins present to determine the parts per hundred resin. Further, when the plasticizer content of a sheet or interlayer is provided herein, it is provided with reference to the amount of plasticizer in the mix or melt that was used to produce the sheet or interlayer.

Examples of suitable plasticizers can include, but are not limited to, triethylene glycol di-(2-ethylhexanoate) ("3GEH"), triethylene glycol di-(2-ethylbutyrate), triethylene glycol diheptanoate, tetraethylene glycol diheptanoate, tetraethylene glycol di-(2-ethylhexanoate) ("4GEH"), polyethylene glycol bis(2-ethylhexanoate), dipropylene glycol dibenzoate, dihexyl adipate, dioctyl adipate, hexyl cyclohexyladipate, diisononyl adipate, heptylnonyl adipate, di(butoxyethyl) adipate, and bis(2-(2-butoxyethoxy)ethyl) adipate, dibutyl sebacate, dioctyl sebacate, and mixtures thereof. The plasticizer may be selected from the group consisting of triethylene glycol di-(2-ethylhexanoate), tetraethylene glycol di-(2-ethylhexanoate), and combinations thereof.

Additionally, other additives may be present in the sheet or interlayer in order to impart particular properties or features to the sheet or interlayer. Such additives can include, but are not limited to, dyes, pigments, stabilizers such as ultraviolet stabilizers, antioxidants, anti-blocking agents, flame retardants, IR absorbers or blockers such as indium tin oxide, antimony tin oxide, lanthanum hexaboride ($LaB_6$) and cesium tungsten oxide, processing aides, flow enhancing additives, lubricants, impact modifiers, nucleating agents, thermal stabilizers, UV absorbers, dispersants, surfactants, chelating agents, coupling agents, adhesives, primers, reinforcement additives, fillers, and combinations thereof.

Although not illustrated in the drawings, it should be understood that in certain embodiments, the tapered polymer sheets or interlayers described herein can be a multilayered sheet or interlayer comprising two or more individual layers. When the sheet or interlayer comprises multiple individual layers, all of the individual layers can be tapered, part of the individual layers can be tapered, or only one of the individual layers can be tapered. In some embodiments when the sheet or interlayer includes three separate polymer layers, at least a portion of at least one, at least two, or all three layers may be tapered to form a multiple layer tapered interlayer.

When the sheet or interlayer is a multiple layer sheet or interlayer, it may comprise at least a first resin layer and a second resin layer, wherein the first and second resin layers are adjacent to one another in the sheet or interlayer. Each of the first and second resin layers may include at least one polymeric resin, as described above, optionally combined with at least one plasticizer and/or one or more of the above-described additives. In some embodiments, the first and second polymers present in each layer may have different compositions. For example, in some embodiments, the first polymeric resin may be a poly(vinyl acetal) resin having a residual hydroxyl content and/or residual acetate content different than the residual hydroxyl content and/or residual acetate content of another poly(vinyl acetal) resin present in the same layer or in a different layer. In certain embodiments wherein the polymer sheet or interlayer includes two or more poly(vinyl acetal) resins, the difference between the residual hydroxyl content of the first and second poly(vinyl acetal) resins could also be at least about 2, at least about 5, at least about 10, at least about 12, at least about 15, at least about 20, or at least about 30 weight percent.

As used herein, the term "weight percent different" or "the difference is at least weight percent" refers to a difference between two given weight percentages, calculated by subtracting the one number from the other. For example, a poly(vinyl acetal) resin having a residual hydroxyl content of 12 weight percent has a residual hydroxyl content that is 2 weight percent lower than a poly(vinyl acetal) resin having a residual hydroxyl content of 14 weight percent (14 weight percent - 12 weight percent = 2 weight percent). As used herein, the term "different" can refer to a value that is higher than or lower than another value.

When the polymer sheet or interlayer includes two or more poly(vinyl acetal) resins, at least one of the poly(vinyl acetal) resins may have a residual acetate content different than another poly(vinyl acetal) resins in the sheet or interlayer. In certain embodiments, the difference between the residual acetate contents of two or more poly(vinyl acetal) resins can be at least about 2, at least about 3, at least about 4, at least about 5, at least about 8, or at least about 10 weight percent. In other embodiments, the difference between the residual acetate content of two or more poly(vinyl acetal) resins can be within the ranges provided above, or the difference can be less than about 3, not more than about 2, not more than about 1, or not more than about 0.5 weight percent.

When the polymer sheet or interlayer includes two or more adjacent layers, the first and second resin layers may exhibit different glass transition temperatures. Glass transition temperature, or $T_g$, is the temperature that marks the transition from the glass state of the polymer to the rubbery state. The glass transition temperature of a polymer resin or sheet can be determined by dynamic mechanical thermal analysis (DTMA). The DTMA measures the storage (elastic) modulus (G') in Pascals, loss (viscous) modulus (G") in Pascals, and the tan delta (G"/G') of the specimen as a function of temperature at a given oscillation frequency and temperature sweep rate. The glass transition temperature is then determined by the position of the tan delta peak on the temperature scale. Glass transition temperatures provided herein are determined at an oscillation frequency of 1 Hz under shear mode and a temperature sweep rate of 3°C/min.

The difference in the glass transition temperature of the first resin layer and the second resin layer in a multiple layer sheet or interlayer can be at least about 3, at least about 5, at least about 8, at least about 10, at least about 12, at least about 15, at least about 18, at least about 20, at least about 22, or at least about 25°C. One of the first and second resin layers can have a glass transition temperature of at least about 26, at least about 28, at least about 30, at least about 33, at least about 35°C and/or not more than about 70, not more than about 65, not more than about 60, not more than about 55, not more than about 50°C, or in the range of from about 26 to about 70, about 30 to about 60, about 35 to about 50°C. The other of the first and second poly(vinyl acetal) resins can have a glass transition temperature of not more than 25, not more than about 20, not more than about 15, not more than about 10, not more than about 5, not more than about 0, not more than about -5, or not more than about -10°C.

Whether single or multiple layer, the sheets and interlayers described herein may be formed according to any suitable method. Exemplary methods of forming polymer sheets and interlayers can include, but are not limited to, solution casting, compression molding, injection molding, melt extrusion, melt blowing, and combinations thereof. Multilayer interlayers including two or more resin layers may also be produced according to any suitable method such as, for example, co-extrusion, blown film, melt blowing, dip coating, solution coating, blade, paddle, air-knife, printing, powder coating, spray coating, and combinations thereof. In various embodiments of the present invention, the polymer sheets or interlayers may be formed by extrusion or co-extrusion.

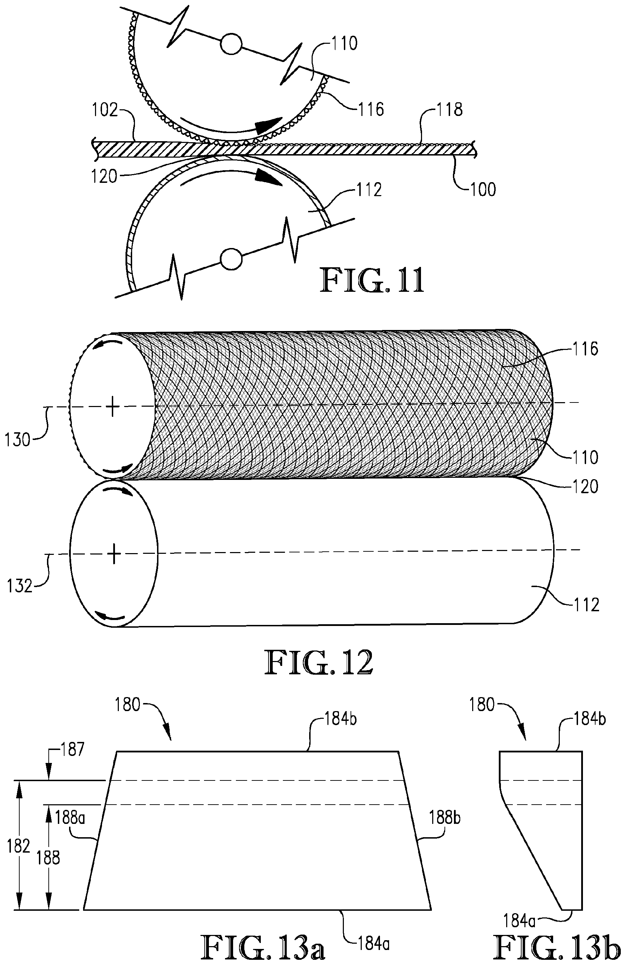

Once formed, at least a portion of the polymer sheet or interlayer may be embossed via passage through at least one set of rollers in order to form an embossed surface region as described previously. Turning now to FIGS. 11 and 12, a pair of rollers 110 and 112 suitable for producing an embossed polymer sheet according to one or more embodiments of the present invention is provided. In particular, as shown in FIGS. 11 and 12, rollers 110 and 112 define a nip 120 therebetween for passing a polymer sheet through during the embossing process. At least one of the rollers, shown as upper roller 110 in FIGS. 11 and 12, may be an embossed roller having a pattern of ridges and channels for imparting an embossed pattern onto at least a portion of the surface of the polymer sheet passing through nip 120. The surface of roller 110 may have any suitable pattern, including, for example, a straight line sawtooth pattern, and can impress a similar, but negative, pattern onto at least a portion of the surface of the polymer sheet. The pair of rollers 110, 112 shown in FIGS. 11 and 12 may be positioned directly after an extruder and die (not shown) with no intervening cooling roll, or the rollers may be positioned after one or more cooling rollers (not shown) located at the outlet of the extrusion die. Further, in some embodiments, the pair of rollers 110 and 112 may be separate from the production line used to form the sheet and can be configured to emboss a preformed, re-heated polymer sheet from a stationary storage roll (not shown).

The embossed roller may comprise a metal roller or a roller with a metal surface. In some embodiments, the embossed roller may be a heated roller may have a surface temperature of at least about 100, at least about 110, at least about 120, or at least about 130°C and/or not more than about 250, not more than about 240, not more than about 230, not more than about 220°C. Further, in some embodiments, the embossed roller surface may have a temperature in the range of from about 100 to about 250°C, about 110 to about 240°C, about 120 to about 220°C. Alternatively, the embossed roller may not be a heated roller and may have a temperature similar to the temperature of the polymer sheet. In some embodiments, at least a portion of the surface of the embossed roller may be coated with an anti-stick release coating and/or a lubricating material to prevent the polymer resin from sticking to the roller.

As shown in FIGS. 11 and 12, the other roller 112 of the pair of rollers used to emboss the polymer sheet or interlayer may not be an embossed roller. The surface of this non-embossed roller 112 may be substantially smooth and may not impart any noticeable degree of surface roughness to the surface of the polymer sheet which it contacts as the sheet passes through nip 120. The surface of roller 112 may be formed of any suitable material and, in some embodiments, it may be at least partially coated with a rubber or rubber-like material. According to one embodiment, the rubber or rubber-like material used to coat at least a portion of the surface of the non-embossed roller, shown as roller 112 in FIGS. 11 and 12, may have a Shore A hardness of at least about 20, at least about 30, at least about 40 and/or not more than about 100, not more than about 95, not more than about 90, not more than about 85, measured according to ASTM D-2240. Further, in some embodiments, the Shore A hardness of the rubber coating present on at least a portion of the non-embossed roller can be in the range of from about 20 to about 100, about 30 to about 95, about 40 to about 90.

In some embodiments, as shown in FIGS. 11 and 12, rollers 110 and 112 may be oriented such that the angle between the axes of rotation 130 and 132 of each of rollers 110 and 112 is less than the minimum wedge angle of the polymer sheet being embossed. For example, when the polymer sheet being passed through nip 120 of rollers 110 and 112 has a minimum wedge angle of at least about 0.10 mrad, the angle between the axes of rotation 130, 132 of rollers 110 and 112 can be less than 0.10 mrad. In some embodiments, the angle between the axes of rotation 130, 132 of rollers 110 and 112 can be less than about 0.10, less than about 0.075, less than about 0.05, or less than about 0.01 mrad, or it can be zero when, for example, rollers 110 and 112 are parallel, as shown in FIG. 12. Even when oriented parallel to one another, rollers 110 and 112 can be capable of embossing a tapered interlayer or sheet as described herein to achieve a surface roughness, $R_z$, with the ranges and having an overall uniformity as described previously.

In addition, systems used to emboss polymer sheets and interlayers according to various embodiments of the present invention may include any suitable number of other components, such as, for example, one or more stationary rollers, tension rollers, cooling rollers, and other heated and/or cooled rollers, as needed. In some embodiments, the system used to emboss a tapered sheet or interlayer may include at least one other pair of rollers positioned prior to or after the pair of rollers 110 and 112 shown in FIG. 11 and 12. The other pair of rollers may be configured similarly to rollers 110 and 112 and may include at least one embossed roller. However, in contrast to the pair of rollers 110 and 112 shown in FIGS. 11 and 12, the embossed roller of the second pair may be the lower roller and the upper roller may not be embossed. Using a system with two pairs of rollers configured in this manner may permit both sides of a tapered sheet or interlayer to be embossed with a single pass through the embossing system.

Referring again to FIG. 11, in operation, a polymer sheet 100, which may be a tapered sheet or interlayer as described previously, may be passed through nip 120 of rollers 110 and 112, as shown in FIG. 11. During the passing, at least a portion of the surface, shown as upper surface 102 in FIG. 11, of the polymer sheet 100 may be contacted with at least a portion of the embossing surface 116 of upper roller 110 under conditions sufficient to emboss at least a portion of the surface. In some embodiments, the temperature of the sheet 100 passing through nip 120 can be at least about 0, at least about 10, at least about 20, at least about 30 and/or not more than about 90, not more than about 80, not more than about 70°C, or it can be in the range of from about 0 to about 90°C, about 10 to about 80°C, or about 20 to about 70°C. In other embodiments, the temperature of the sheet 100 passing through nip 120 can be at least about 90, at least about 100, at least about 110, at least about 120 and/or not more than about 230, not more than about 225, not more than about 220°C, or it can be in the range of from about 90 to about 230°C, about 110 to about 225°C, or about 120 to about 220°C.

The force between rollers 110 and 112 at nip 120 can be at least about 50, at least about 75, or at least about 100 pounds per linear inch (pli) and/or not more than about 300, not more than about 275, not more than about 250 pli. In some embodiments, the force between rollers 110 and 112 can be in the range of from about 50 to about 300 pli, about 75 to about 275 pli, or about 100 to about 250 pli. Sheet 100 may have an embossed surface zone 118 with a substantially uniform $R_z$ value as described in detail previously.

If the resulting embossed sheet is an intermediate polymer resin sheet including, for example, two oppositely sloped tapered zones as discussed above with respect to FIGS. 9 and 10, the embossed sheet may be cut along or near its center line to provide a pair of similarly-shaped embossed, tapered interlayers. The tapered interlayers, which may have a profile shape as described previously, can then be utilized in a multiple layer panel that comprises an interlayer and at least one rigid substrate. Any suitable rigid substrate may be used and in some embodiments may be selected from the group consisting of glass, polycarbonate, biaxially oriented PET, copolyesters, acrylic, and combinations thereof. When the rigid substrate includes glass, the glass can be selected from the group listed previously. When the rigid substrate includes a polymeric material, the polymeric material may or may not include a hard coat surface layer. In some embodiments, the multilayer panels include a pair of rigid substrates with the resin interlayer disposed therebetween.

When laminating the resin layers or interlayers between two rigid substrates, such as glass, the process can include at least the following steps: (1) assembly of the two substrates and the interlayer; (2) heating the assembly via an IR radiant or convective device for a first, short period of time; (3) passing the assembly into a pressure nip roll for the first de-airing; (4) heating the assembly for a short period of time to about 60°C to about 120°C to give the assembly enough temporary adhesion to seal the edge of the interlayer; (5) passing the assembly into a second pressure nip roll to further seal the edge of the interlayer and allow further handling; and (6) autoclaving the assembly at temperature between 135°C and 150°C and pressures between 150 psig and 200 psig for about 30 to 90 minutes. Other methods for de-airing the interlayerglass interface, as described according to some embodiments in steps (2) through (5) above include vacuum bag and vacuum ring processes, and both may also be used to form multiple layer panels using interlayers of the present invention as described herein.

In some embodiments, the embossed tapered interlayers as described herein may exhibit enhanced optical performance, after lamination, than conventional tapered interlayers. Clarity is one parameter used to describe the optical performance of the interlayers described herein and may be determined by measuring haze value or percent. Haze value represents the quantification of light scattered by a sample in contrast to the incident light. In some embodiments, the tapered interlayers described herein may have a haze value of less than 5 percent, less than about 4 percent, less than about 3 percent, less than about 2 percent, less than about 1, or less than about 0.5 percent, as measured in accordance with ASTM D1003-13- Procedure B using Illuminant C, at an observer angle of 2 degrees. The haze of an interlayer is measured with a spectrophotometer, such as a Hunterlab UltraScan XE instrument (commercially available from Hunter Associates, Reston, VA), on a polymer sample having a thickness of 0.76 mm, which has been laminated between two sheets of clear glass each having a thickness of 2.3 mm (commercially available from Pittsburgh Glass Works of Pennsylvania).

Additionally, the embossed, tapered interlayers described herein may have a mottle value of not more than 3, not more than 2, or not more than 1 when laminated between two or more rigid substrates as described above. Mottle is another measure of optical quality, which is detected as a texture or graininess. Mottle is a visual defect if the level is too high or too severe, thereby causing objectionable visual appearance. Mottle is assessed and categorized by a side-by-side qualitative comparison of shadowgraph projections for a test laminate with a set of standard laminate shadowgraphs that represent a series, or scale, of mottle values ranging from 1 to 4, with 1 representing a standard of low mottle (i.e., a low number of disruptions) and 4 representing a standard of high mottle (i.e., a high number of disruptions). High mottle is generally considered objectionable, particularly in automotive and architectural applications. Optionally, a model laminate having a single layer interlayer with zero mottle (no mottle) is used to facilitate the evaluation in a test laminate that has a mottle rating lower than the scale of the standard set, such as lower than a rating of 1. A test laminate that shows a shadowgraph projection similar to that of a zero-mottle laminate is assessed to have a mottle rating of zero. The test laminate is prepared with two sheets of clear glass each having a thickness of 2.3 mm (commercially available from Pittsburgh Glass Works of Pennsylvania) and an interlayer having a random rough surface $R_z$ of about 35 to 40 microns and thickness of 0.76 to 0.86 mm.

The mottle value of an interlayer can be determined using a Clear Mottle Analyzer (CMA) that includes a xenon arc lamp, a sample holder, a projection screen, and a digital camera. The xenon arc lamp is used to project a shadowgraph of a laminated sample onto the screen and the camera is configured to capture an image of the resulting shadowgraph. The image is then digitally analyzed using computer imaging software and compared to images of previously-captured standard samples to determine the mottle of the sample. A method of measuring mottle using a CMA is described in detail in U.S. Patent Application Publication No. US 2012-0133764.

Another parameter used to determine the optical performance of an interlayer is transparency, or percent visual transmittance (% $T_{vis}$), which is measured using a spectrophotometer, such as a HunterLab UltraScan EX, in accordance with ASTM D1003, Procedure B using Illuminant C at an observer angle of 2°. The transparency of an interlayer is measured by analyzing a glass laminate samples having an interlayer thickness of about 0.76 mm and a clear glass thickness of 2.3 mm (commercially available from Pittsburgh Glass Works of Pennsylvania). In some embodiments, the tapered interlayers of the present invention can have a percent visual transmittance of at least about 70, at least about 75, at least about 80, at least about 81, at least about 82, at least about 83, at least about 84, at least about 85, at least about 85.5, at least about 86, at least about 86.5, at least about 87, at least about 87.5, at least about 88, or at least about 88.5 percent. More specifically, the interlayers of the present invention have a %$T_{vis}$ of greater than 85 for the interlayers containing only additives of ACAs, UV stabilizers, and antioxidant, or greater than 80% for the interlayers containing additional additives such as pigments, IR absorbers or blockers as mentioned above.

The panels formed from interlayers as described herein can be used for a variety of end use applications, including, for example, for automotive windshields and windows, aircraft windshields and windows, panels for various transportation applications such as marine applications, rail applications, etc., structural architectural panels such as windows, doors, stairs, walkways, balusters, decorative architectural panels, weather-resistant panels, such as hurricane glass or tornado glass, ballistic panels, and other similar applications.

One embodiment of a windshield utilizing a tapered interlayer as described herein is provided in FIGS. 13a and 13b, which depicts an interlayer 180 that is similar in thickness profile to the interlayer 30 of FIG. 4. The interlayer 180 of FIGS. 13a and 13b is configured for use in a vehicle windshield by fixing the interlayer between two sheets of glass. As depicted in FIG. 13a, the first terminal edge 184a of the interlayer 180 can be located at the bottom of the windshield, while the second terminal edge 184b of the interlayer 180 can be located at the top of the windshield. The tapered zone 182 of the interlayer 180 is positioned in an area of the windshield where a heads-up display is to be located. The tapered zone 182 of interlayer 180 includes a constant angle zone 186 and a variable angle zone 187. As depicted in FIG. 13a, in certain embodiments, the tapered zone 182 extends entirely across the interlayer 180 between a first side edge 188a and a second side edge 188b of the interlayer 180. FIG. 13b, which is similar to FIG. 4, shows the thickness profile of the interlayer 180 between the bottom of the windshield and the top of the windshield.

The following example is intended to be illustrative of the present invention in order to teach one of ordinary skill in the art to make and use the invention and are not intended to limit the scope of the invention in any way.

## EXAMPLE

Several interlayers were formed by coextruding plasticized poly(vinyl n-butyral) resin into three-layer interlayers having a wedge angle of 0.35 mrad. Each of the interlayers was then embossed between a heated textured metal roll and a deformable rubber roll to form embossed interlayers. Each of the interlayers was passed through the rollers twice in order to emboss both the top and bottom surfaces of each interlayer. One of the interlayers was embossed under a first set of conditions (Condition #1) and the other was embossed under a different set of conditions (Condition #2). The roll temperature and nip foot print of each set of conditions is listed in Table 1 below.

**Table 1: Summary of Embossing Conditions**

| Embossing Condition | Roll Temperature | Nip Foot Print |
|---|---|---|
| Condition #1 | 170°C | 35 mm |
| Condition #2 | 165°C | 41 mm |

After embossing, the surface roughness of the outer layers of each of the embossed samples was determined using the $R_z$ method described in detail previously. Measurements were taken at the thinnest ("$T_{min}$"), thickest ("Tmax"), and middle ("$T_{mid}$") portions of each tapered interlayer, on both the top and bottom surfaces. The results of the surface roughness measurements for each of the four interlayers are summarized in Table 2, below.

Portions of each of the embossed samples were then placed between sheets of 2.3 mm-thick flat glass to form several glass/laminate/glass constructs. Two of the constructs (Constructs 1 and 2) were subjected to vacuum bag de-airing as described previously, which was conducted at a pressure of -1.0 bar. The temperature profile uring the vacuum bag de-airing step included an initial temperature of 25°C held for 10 minutes, followed by a 15-minute heating period, during which the temperature was increased to 120°C. The temperature was held at 120°C for 10 minutes, and was then reduced to 50°C over 15 minutes. The other two constructs (Constructs 3 and 4) were subjected to nip-roll deairing with a nip-roll gap of 3 mm and a nip-roll pressure of 4 bar. The temperature before the nip was between 75°C and 80°C.

The resulting panels were autoclaved at a temperature of 143°C and a pressure of 13 bar for 20 minutes. After autoclaving, the mottle values of each of the autoclaved samples was measured at each of the thinnest, thickest, and middle portions of each interlayer, according to the method described above. The results are summarized in Table 2, below.

**Table 2: De-Airing Performance and Mottle of Embossed Interlayers**

| Construct | Embossing Condition | $R_z$ Top Layer | | | $R_z$ Bottom Layer | | | De-Airing | | Mottle | | |
|---|---|---|---|---|---|---|---|---|---|---|---|---|
| | | $T_{min}$ | $T_{mid}$ | $T_{max}$ | $T_{min}$ | $T_{mid}$ | $T_{max}$ | Method | Result | $T_{min}$ | $T_{mid}$ | $T_{max}$ |
| 1 | 1 | 54 | 59 | 60 | 57 | 60 | 61 | Vacuum | Very Good | 0.56 | 0.50 | 0.50 |
| 2 | 1 | 55 | 58 | 60 | 54 | 60 | 61 | Vacuum | Very Good | 0.56 | 0.50 | 0.50 |
| 3 | 2 | 43 | 51 | 50 | 46 | 51 | 50 | Nip Roll | Good | 0.56 | 0.48 | 0.52 |
| 4 | 2 | 35 | 45 | 50 | 46 | 50 | 50 | Nip Roll | Good | 0.56 | 0.50 | 0.52 |

As shown in Table 2, above, embossed tapered interlayers according to embodiments of the present invention exhibit both good de-airing performance and good mottle characteristics.

While the invention has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the spirit and scope of the invention.

It will further be understood that any of the ranges, values, or characteristics given for any single component of the present disclosure can be used interchangeably with any ranges, values or characteristics given for any of the other components of the disclosure, where compatible, to form an embodiment having defined values for each of the components, as given herein throughout. For example, an interlayer can be formed comprising poly(vinyl butyral) having a residual hydroxyl content in any of the ranges given in addition to comprising a plasticizers in any of the ranges given to form many permutations that are within the scope of the present disclosure, but that would be cumbersome to list. Further, ranges provided for a genus or a category, such as phthalates or benzoates, can also be applied to species within the genus or members of the category, such as dioctyl terephthalate, unless otherwise noted.

The present invention and its preferred embodiments is now further described in terms of numbered Items 1 to 23:

Item 1. A polymeric sheet suitable for producing an interlayer, said sheet comprising:

at least one polymeric resin,
wherein said sheet comprises at least one tapered zone and at least one substantially flat zone, wherein said tapered zone has a wedge angle of at least 0.10 mrad, wherein said substantially flat zone has a wedge angle of less than 0.05 mrad,
wherein said sheet comprises at least one embossed surface, wherein at least 75 percent of said embossed surface has an $R_z$ value within 25 percent of the average $R_z$ value for the entire embossed surface.

Item 2. The sheet of Item 1, wherein said tapered zone comprises at least one variable angle zone having a continuously varying wedge angle.

Item 3. The sheet of Item 2, wherein said tapered zone further comprises at least one constant angle zone having a substantially constant wedge angle.

Item 4. The sheet of Item 1, wherein said tapered zone comprises at least one constant angle zone having a substantially constant wedge angle.

Item 5. The sheet of Item 4, wherein said tapered zone comprises two or more constant angle zones having different substantially constant wedge angles.

Item 6. The sheet of Item 1, wherein said at least one substantially flat zone comprises two separate substantially flat zones, wherein one of said substantially flat zones forms the thinnest portion of said sheet and the other of said substantially flat zones forms the thickest portion of said sheet.

Item 7. The sheet of Item 1, wherein said at least one tapered zone comprises a pair of oppositely-sloped tapered zones, wherein said at least one substantially flat zone includes a substantially flat central zone disposed between said pair of oppositely-sloped tapered zones and/or wherein said at least one substantially flat zone includes two substantially flat edge zones separated from one another by said pair of oppositely-sloped tapered zones.

Item 8. The sheet of Item 1, wherein said embossed surface has an average $R_z$ value in the range of from 20 to 90 microns.

Item 9. The sheet of Item 1, wherein said sheet is a multiple layer sheet comprising at least a first polymeric layer and a second polymeric layer adjacent to said first polymeric layer, wherein said at least one polymeric resin present in said sheet comprises a poly(vinyl acetal) resin, and wherein at least one of said first and said second polymeric layers comprises said poly(vinyl acetal) resin and at least one plasticizer.

Item 10. A polymeric sheet suitable for producing an interlayer, said sheet comprising:

at least one polymeric resin,
wherein said sheet comprises at least two angled zones, each having a wedge angle of at least 0.1 mrad,
wherein said sheet exhibits one or more of the following characteristics-

    i. said two angled zones have different wedge angles,
    ii. said two angled zones are oppositely sloped,
    iii. said sheet comprises at least one substantially flat zone having a wedge angle of less than 0.05 mrad;

wherein said sheet comprises at least one embossed surface, wherein at least 75 percent of said embossed surface has an $R_z$ value within 25 percent of the average $R_z$ value for the entire embossed surface.

Item 11. The sheet of Item 10, wherein said sheet is not symmetric about its centerline.

Item 12. The sheet of Item 11, wherein said sheet exhibits characteristic (i) and wherein said sheet further comprises one tapered zone that includes both of said two angled zones.

Item 13. The sheet of Item 10, wherein said sheet is symmetric about its centerline.

Item 14. The sheet of Item 13, wherein said sheet exhibits characteristic (ii) and further comprises two oppositely-sloped tapered zones located on opposite sides of the centerline, wherein each of said oppositely-sloped tapered zones includes one of said two angled zones.

Item 15. The sheet of Item 13, wherein said sheet further exhibits characteristic (iii) and wherein said at least one substantially flat zone includes a substantially flat central zone bisected by the centerline and/or wherein said at least one substantially flat zone includes two substantially flat edge zones spaced from one another and located on opposite sides of the centerline.

Item 16. The sheet of Item 10, wherein at least one of said angled zones is a variable angle zone having a continuously varying wedge angle.

Item 17. The sheet of Item 16, wherein at least one of said angled zones is a constant angle zone having a substantially constant wedge angle.

Item 18. The sheet of Item 10, wherein said sheet comprises a multiple layer polymer sheet comprising at least a first polymeric layer and a second polymeric layer adjacent to said first polymeric layer, wherein at least one of said first and said second polymeric layers comprises a poly(vinyl acetal) resin and at least one plasticizer.

Item 19. A method of making an interlayer, said method comprising:

    (a) providing at least one pair of rollers defining a nip therebetween, wherein at least one of said rollers comprises an embossing surface;
    (b) passing a polymeric sheet between said rollers through said nip; and
    (c) during said passing, contacting said polymeric sheet with at least a portion of said embossing surface under conditions sufficient to form an embossed region on at least a portion of at least one surface of said polymeric sheet,
    wherein said polymeric sheet includes at least one tapered zone having a minimum wedge angle of at least 0.1 mrad, wherein the angle defined between the axes of rotation of each of said rollers is less than said minimum wedge angle.

Item 20. The method of Item 19, wherein the angle defined between the axes of rotation of said rollers is less than 0.05 mrad.

Item 21. The method of Item 19, wherein at least 75 percent of said embossed region has an $R_z$ value within 25 percent of the average $R_z$ value for the entire embossed region.

Item 22. The method of Item 19, wherein at least a portion of the surface of the other of said rollers is coated with a rubber material having a Shore A hardness in the range of from 20 to 90.

Item 23. The method of Item 19, further comprising another pair of rollers with a second nip defined therebetween, wherein at least one of said rollers in said another pair comprises a second embossing surface; passing said polymeric sheet between said another pair of rollers through said second nip and, during said passing, contacting said polymeric sheet with at least a portion of said second embossing surface under conditions sufficient to form another embossed region on at least a portion of another surface of said polymeric sheet

**Claims**

1. A method of making an interlayer, said method comprising:

   (a) providing at least one pair of rollers defining a nip therebetween, wherein at least one of said rollers comprises an embossing surface;
   (b) passing a polymeric sheet between said rollers through said nip; and
   (c) during said passing, contacting said polymeric sheet with at least a portion of said embossing surface under conditions sufficient to form an embossed region on at least a portion of at least one surface of said polymeric sheet,
   wherein said polymeric sheet includes at least one tapered zone having a minimum wedge angle of at least 0.1 mrad, wherein the angle defined between the axes of rotation of each of said rollers is less than said minimum wedge angle.

2. The method of claim 1, wherein the angle defined between the axes of rotation of said rollers is less than 0.05 mrad; or

   wherein at least 75 percent of said embossed region has an $R_z$ value within 25 percent of the average $R_z$ value for the entire embossed region; or
   wherein at least a portion of the surface of the other of said rollers is coated with a rubber material having a Shore A hardness in the range of from 20 to 90.

3. The method of claim 1, further comprising another pair of rollers with a second nip defined therebetween, wherein at least one of said rollers in said another pair comprises a second embossing surface; passing said polymeric sheet between said another pair of rollers through said second nip and, during said passing, contacting said polymeric sheet with at least a portion of said second embossing surface under conditions sufficient to form another embossed region on at least a portion of another surface of said polymeric sheet.

4. A polymeric sheet suitable for producing an interlayer, said sheet comprising:

   at least one polymeric resin,
   wherein said sheet comprises at least one tapered zone and at least one substantially flat zone, wherein said tapered zone has a wedge angle of at least 0.10 mrad, wherein said substantially flat zone has a wedge angle of less than 0.05 mrad,
   wherein said sheet comprises at least one embossed surface, wherein at least 75 percent of said embossed surface has an $R_z$ value within 25 percent of the average $R_z$ value for the entire embossed surface.

5. The sheet of claim 4, wherein said tapered zone comprises at least one variable angle zone having a continuously varying wedge angle, preferably
   wherein said tapered zone further comprises at least one constant angle zone having a substantially constant wedge angle.

6. The sheet of claim 4, wherein said tapered zone comprises at least one constant angle zone having a substantially constant wedge angle, preferably
   wherein said tapered zone comprises two or more constant angle zones having different substantially constant wedge angles.

7. The sheet of claim 4, wherein said at least one substantially flat zone comprises two separate substantially flat zones, wherein one of said substantially flat zones forms the thinnest portion of said sheet and the other of said substantially flat zones forms the thickest portion of said sheet.

8. The sheet of claim 4, wherein said at least one tapered zone comprises a pair of oppositely-sloped tapered zones, wherein said at least one substantially flat zone includes a substantially flat central zone disposed between said pair of oppositely-sloped tapered zones and/or wherein said at least one substantially flat zone includes two substantially flat edge zones separated from one another by said pair of oppositely-sloped tapered zones.

9. The sheet of claim 4, wherein said embossed surface has an average $R_z$ value in the range of from 20 to 90 microns.

10. The sheet of claim 4, wherein said sheet is a multiple layer sheet comprising at least a first polymeric layer and a second polymeric layer adjacent to said first polymeric layer, wherein said at least one polymeric resin present in said sheet comprises a poly(vinyl acetal) resin, and wherein at least one of said first and said second polymeric layers comprises said poly(vinyl acetal) resin and at least one plasticizer.

11. A polymeric sheet suitable for producing an interlayer, said sheet comprising:

at least one polymeric resin,
wherein said sheet comprises at least two angled zones, each having a wedge angle of at least 0.1 mrad,
wherein said sheet exhibits one or more of the following characteristics-

i. said two angled zones have different wedge angles,
ii. said two angled zones are oppositely sloped,
iii. said sheet comprises at least one substantially flat zone having a wedge angle of less than 0.05 mrad;

wherein said sheet comprises at least one embossed surface, wherein at least 75 percent of said embossed surface has an $R_z$ value within 25 percent of the average $R_z$ value for the entire embossed surface.

12. The sheet of claim 11, wherein said sheet is not symmetric about its centerline, preferably
wherein said sheet exhibits characteristic (i) and wherein said sheet further comprises one tapered zone that includes both of said two angled zones.

13. The sheet of claim 11, wherein said sheet is symmetric about its centerline, preferably

(a) wherein said sheet exhibits characteristic (ii) and further comprises two oppositely-sloped tapered zones located on opposite sides of the centerline, wherein each of said oppositely-sloped tapered zones includes one of said two angled zones or
(b) wherein said sheet further exhibits characteristic (iii) and wherein said at least one substantially flat zone includes a substantially flat central zone bisected by the centerline and/or wherein said at least one substantially flat zone includes two substantially flat edge zones spaced from one another and located on opposite sides of the centerline.

14. The sheet of claim 11, wherein at least one of said angled zones is a variable angle zone having a continuously varying wedge angle, preferably
wherein at least one of said angled zones is a constant angle zone having a substantially constant wedge angle.

15. The sheet of claim 11, wherein said sheet comprises a multiple layer polymer sheet comprising at least a first polymeric layer and a second polymeric layer adjacent to said first polymeric layer, wherein at least one of said first and said second polymeric layers comprises a poly(vinyl acetal) resin and at least one plasticizer.

FIG.1

First Reference Line

Flat Zone

Interlayer

Second Boundary

First Boundary

Wedge Angle

Second Outer Terminal Edge

First Outer Terminal Edge

Flat Zone

$T_{max}$

$T_{min}$

Tapered Zone

Tapered Zone Width

Interlayer Width

Second Reference Line

## FIG. 2

20

24a

$\theta$

24b

22

## FIG. 3

30

34a

35a

$\theta_c$

35b
34b

36

37

32

33

## FIG. 4

FIG. 5

FIG. 6

FIG. 7

FIG.8

FIG.9

FIG.10

FIG. 11

FIG. 12

FIG. 13a

FIG. 13b

Europäisches
Patentamt
European
Patent Office
Office européen
des brevets

# EUROPEAN SEARCH REPORT

**Application Number**

EP 22 20 1442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/009714 A1 (LEE DAVID J [US] ET AL) 11 January 2007 (2007-01-11)<br>* paragraph [0158] – paragraph [0159]; examples 3-4 *<br>* paragraph [0087] – paragraph [0088] *<br>* figures 1-5,7B,8 *<br>* paragraph [0168] – paragraph [0169]; example 13 *<br>* paragraph [0058] – paragraph [0060] *<br>* paragraph [0181]; example 2A *<br>* claim 1 *<br>* paragraph [0171]; example 14 *<br>* paragraph [0017] *<br>----- | 1-15 | INV.<br>C08J5/18<br>B32B27/08<br>B32B27/30<br>B32B27/22<br>B32B3/26<br>B32B38/06<br>B32B17/10<br>B32B3/02<br>B32B9/04<br>B32B27/18<br>B32B27/36<br>B32B27/42<br>B32B3/30 |
| Y | US 6 093 471 A (HOPFE HAROLD H [US] ET AL) 25 July 2000 (2000-07-25)<br>* claim 1 *<br>* column 2, line 62 – line 67 *<br>* column 7, line 23 – line 24; example 1 *<br>* column 1, line 55 – line 59 *<br>----- | 1-15 | |
| Y | US 2014/302281 A1 (YACOVONE VINCENT J [US]) 9 October 2014 (2014-10-09)<br>* paragraph [0058] *<br>* paragraph [0087] *<br>* figures 1-2 *<br>----- | 3 | **TECHNICAL FIELDS SEARCHED (IPC)**<br><br>B32B |
| A | US 5 087 502 A (ESPOSITO ROBERT A [US] ET AL) 11 February 1992 (1992-02-11)<br>* column 5, line 8 – line 10 *<br>----- | 1-15 | |

The present search report has been drawn up for all claims

| Place of search | Date of completion of the search | Examiner |
|---|---|---|
| The Hague | 18 January 2023 | Flores de Paco, M |

EPO FORM 1503 03.82 (P04C01)

## ANNEX TO THE EUROPEAN SEARCH REPORT
## ON EUROPEAN PATENT APPLICATION NO.

EP 22 20 1442

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2023

| Patent document cited in search report | | Publication date | Patent family member(s) | | Publication date |
|---|---|---|---|---|---|
| US 2007009714 | A1 | 11-01-2007 | EP 1880243 | A2 | 23-01-2008 |
| | | | JP 2008544878 | A | 11-12-2008 |
| | | | KR 20080021011 | A | 06-03-2008 |
| | | | US 2007009714 | A1 | 11-01-2007 |
| | | | WO 2006122305 | A2 | 16-11-2006 |
| US 6093471 | A | 25-07-2000 | NONE | | |
| US 2014302281 | A1 | 09-10-2014 | CN 105102223 | A | 25-11-2015 |
| | | | EP 2983910 | A1 | 17-02-2016 |
| | | | JP 2016521302 | A | 21-07-2016 |
| | | | KR 20150140345 | A | 15-12-2015 |
| | | | US 2014302281 | A1 | 09-10-2014 |
| | | | US 2017121475 | A1 | 04-05-2017 |
| | | | WO 2014168793 | A1 | 16-10-2014 |
| US 5087502 | A | 11-02-1992 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62193393
- US 2282057 A
- US 2282026 A
- US 20120133764 A

**Non-patent literature cited in the description**

- Vinyl Acetal Polymers. **B.E. WADE.** Encyclopedia of Polymer Science & Technology. 2003, vol. 8, 381-399